# EUROPEAN PATENT SPECIFICATION

(11) **EP 4 610 629 B1**
(45) Date of publication and mention of the grant of the patent: **18.03.2026**
(21) Application number: 24382221.0
(22) Date of filing: 29.02.2024
(51) Int. Cl.: G01N 21/25, G01N 21/552, G01N 21/05

(54) **SENSOR AND SENSOR SYSTEM FOR THE SIMULTANEOUS DETECTION OF MULTIPLE ANALYTES, AND CORRESPONDING METHOD**
SENSOR UND SENSORSYSTEM ZUM GLEICHZEITIGEN NACHWEIS MEHRERER ANALYTEN SOWIE VERFAHREN HIERZU
SYSTÈME DE CAPTEUR ET DE CAPTEUR POUR LA DÉTECTION SIMULTANÉE DE MULTIPLES ANALYTES, ET PROCÉDÉ CORRESPONDANT

(43) Date of publication of application: 03.09.2025
(73) Proprietor: CENTRE TECNOLOGIC DE TELECOMUNICACIONS DE CATALUNYA (CTTC), 08860 Castelldefels (ES); MINISTERIO DE DEFENSA, GOBIERNO DE ESPAÑA, 28071 Madrid (ES)
(72) Inventor: VELAZQUEZ, Jesus, 08860 Castelldefels (ES); MISHRA, Satyendra, 08860 Castelldefels (ES); LLAMAS, Ignacio, 08860 Castelldefels (ES); KIM, Jung-Mu, 08860 Castelldefels (ES); FONTANA, Eduardo, 08860 Castelldefels (ES); CARRION, Benjamin, Castelldefels, 08860 (ES)
(74) Representative: Mohammadian, Dario

(56) References cited:
- US-A1- 2003 048 452
- US-A1- 2004 155 309
- DOSTALEK J ET AL: "Multichannel surface plasmon resonance biosensor with wavelength division multiplexing", SENSORS AND ACTUATORS B: CHEMICAL, ELSEVIER BV, NL, vol. 108, no. 1-2, 22 July 2005 (2005-07-22), pages 758 - 764, XP025328846, ISSN: 0925-4005, [retrieved on 20050722], DOI: 10.1016/J.SNB.2004.12.096
- BANERJEE J ET AL: "Simultaneous excitation of multi-spectral surface plasmon resonance using multi-stepped-thickness metallic film", JOURNAL OF APPLIED PHYSICS, AMERICAN INSTITUTE OF PHYSICS, 2 HUNTINGTON QUADRANGLE, MELVILLE, NY 11747, vol. 117, no. 11, 21 March 2015 (2015-03-21), XP012195827, ISSN: 0021-8979, [retrieved on 19010101], DOI: 10.1063/1.4915085
- HOMOLA ET AL: "Multi-analyte surface plasmon resonance biosensing", METHODS, ACADEMIC PRESS, NL, vol. 37, no. 1, 1 September 2005 (2005-09-01), pages 26 - 36, XP005109756, ISSN: 1046-2023, DOI: 10.1016/J.YMETH.2005.05.003

## Description

### TECHNICAL FIELD

The present invention relates generally to the field of sensors, and in particular, to a sensor for the simultaneous detection of multiple analytes, and corresponding system and method.

### BACKGROUND OF THE INVENTION

Analyte sensors, such as for the detection of gas, biological or chemical components, based on the technology known as Surface Plasmon Resonance, SPR, are composed of a dielectric and a noble metal wherein the SPR effect is generated, as well as a material selective to the analyte to be detected, the selective material being adhered to the metal film. A plasmon is an oscillation of electrons in the material, which is studied and applied in plasmonics. Plasmonic metals include noble metals (gold, silver, copper, aluminum, and so on). Plasmonic-sensitive materials are materials that exhibit plasmonic properties.

Materials which are sensitive to an analyte are known as analyte-selective materials. When in contact with a particular analyte, and as a light beam is incident onto it, a specific property of the selective material undergoes a transformation, which reflects itself as an SPR effect on the metal-analyte interface, wherein an evanescent wave is generated with decreasing intensity as a function of the distance from the region of impingement. As the light reflects off this region of impingement, at least one of its properties is modified due to this SPR effect. The determination of this change in property of the light, from its transmission to its reception, is indicative of the type of analyte present in the sensor.

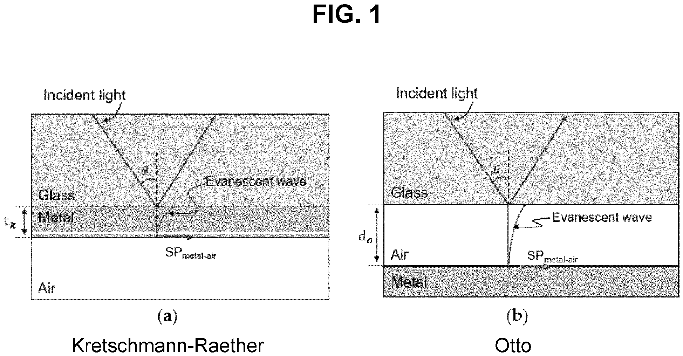

**FIG. 1** depicts the two main configurations for example gas sensors. FIG. 1(a) depicts a Kretschmann-Raether configuration and FIG. 1(b) depicts an Otto configuration. In this example Kretschmann-Raether configuration, the layers are glass followed by metal and followed by a cavity containing a mix of air and the gas to be determined. In this example Otto configuration, the layers are glass followed by the cavity containing a mix of air and the gas to be determined and then followed by the metal layer. The degree of SPR effect depends on several factors, such as the thickness (tₖ, dₒ) of the layer wherein the evanescent wave is generated, gas concentrations, mixtures of gases, deposited material on prisms, and so on.

The selective material is a material with certain affinity towards the analyte(s) of interest to attain a desired sensitivity. The selective material may be the metal itself, or an additional thin layer overcoating the metal. The selective materials, in most cases, will be deposited on the substrate. Depending on sensor design and configuration, different substrate positions are used: for either the Kretschmann configuration substrates and prisms that are space-free, or for Otto substrates and prisms that have space, light is used to excite the SPR effect at the metal-dielectric interface.

In the depicted drawings, the dielectric is glass, which serves as a prism to correctly polarize the incident light (TM-polarized). The light internally reflects on the far interface of the glass, however some of its energy propagates through the next material, which in the case of the Kretschmann-Raether configuration is metal, and in the case of the Otto configuration is the mix of air and analyte. On the metal-air interface, the propagated energy generates an SPR effect which properties depend on the properties of the analyte being determined. This SPR effect in turn induces a corresponding change of a parameter or property of the reflected light. The change determined by comparing the property of the incident light to the reflected light's property is indicative of the type of analyte present in the sensor. The skilled artisan is aware of these two main configurations and the precise dynamics of the SPR effect, which will not be further detailed herein.

The problem with these sensors is that they can only measure one analyte at a time. To measure a plurality of analytes, they must be emptied and cleaned after each use before they can be reused to measure a different analyte. This is a long and cumbersome process, which does not allow the detection of multiple analytes in real-time. It is to be considered that such sensor systems are normally fixed onto autonomous vehicles, which are then driven into the contaminated environment, while the human operator is observing and managing the vehicle from a safe zone.

Another option is to make a plurality of sensors available, each optimized for the determination of a different analyte. However, this is not only expensive, but also very impractical, as it occupies a lot of space as the overall system comprising all of these sensors would have to have not only the multiple sensors, but associated electronics, and other components enabling light transmission and reception adapted for each sensor, and so on. It is prone to malfunctioning and not practical for contaminated environments with potentially hazardous analytes. It is also not cost effective.

In order to reduce the costs and produce a more robust system, another option is to manually replace the sensor by a new one capable of measuring a different analyte each time a sensor has already been used. However, this option requires the autonomous unmanned vehicle to return to the operator's area, where the sensor can be manually replaced and sent back into the contaminated area. This is an extremely slow process and, in many scenarios, not practical, as once an autonomous vehicle enters a contaminated zone, it might be difficult if not impossible for it to exit the zone, and it might even not be safe for it to approximate itself to human operators due to residual analytes it might bring along with it. Also, it is expensive as a numerous one-time use sensors will have to be used and jettisoned. It is also not a viable option to send the human operator physically into the contaminated area multiple times in order to replace the sensors. This is time and cost consuming, and extremely dangerous, which is completely impractical for its application in a polluted and hazardous environment for humans. Publications "Multichannel surface plasmon resonance biosensor with wavelength division multiplexing", by DOSTALEK Et Al, "Simultaneous excitation of multi-spectral surface plasmon resonance using multi-stepped-thickness metallic film" by BANERJEE Et Al, US-A-2004/155309 and "Multi-analyte surface plasmon resonance biosensing" by HOMOLA Et Al, all refer to sensor configurations based on surface plasmon resonance technology for the detection of multiple analytes with varying degrees of success. US 2003/0048452 A1 discloses an imaging SPR apparatus having a sensor surface on which specific molecules are arranged in a pattern.

Therefore, a need exists to effectively solve the abovementioned problems.

### SUMMARY OF THE INVENTION

It is therefore an object of the present invention to provide solutions to the above-mentioned problems. The invention is defined in the claims.

It is desirable for a sensor to be able to simultaneously determine the existence of multiple analytes present in an environment, that is, without the need to purge the sensor and clean it in order to proceed with the measurement of a different analyte, or replace the whole sensor with a different one, or without having to configure a system with many sensors optimized for the detection of one analyte each.

Hence, it is an object of the invention to provide an improved sensor configured to operate on the principle of surface plasmon resonance to simultaneously determine multiple analytes.

It is another object of the invention to provide a system for simultaneously determining multiple analytes comprising the at least one improved sensor.

It is another object of the invention to provide a method of simultaneously determining multiple analytes using the improved SPR-based sensor configured to operate on the principle of surface plasmon resonance.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular, the invention provides methods, apparatus, systems, processors, program codes, computer readable media, and other apparatuses and elements that implement various aspects, configurations and features of the invention, as described below.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIG. 1** depicts the two main configurations of prior art gas sensors.
**FIG. 2** depicts a schematic representation of an example implementation of the multi-analyte/parameter SPR-based sensor attached to a microfluidic chamber.
**FIG. 3** depicts a top-view schematic representation of example implementations of a detection section.
**FIG. 4** depicts a top-view schematic representation of an example implementation of the multi-analyte/parameter SPR-based sensor segmented into 8 equal segments.
**FIG. 5** depicts a schematic representation of the prism coupling configuration: FIG. 5A) Kretschmann-Raether and FIG. 5B) Otto.
**FIG. 6** depicts an angle-dependent variation of the reflection power for several thicknesses of a single metal silver Ag.
**FIG. 7** depicts an angle-dependent variation of the reflection power for two different metals (gold Au and silver Ag) of the same thickness (45 nm) with 1.34 as the outside refractive index.
**FIG. 8** depicts an angle-dependent variation of the reflection power for one metal (silver Ag) of the same thickness (45 nm) and different thicknesses of dielectric material.
**FIG. 9** depicts a general method of operating the sensor.

### DETAILED DESCRIPTION OF THE INVENTION

The invention focuses on improving on major drawbacks of prior art sensor technology, such as slow response time, high cost, single analyte (or parameter), detection, and so on. Many sensors are available on the market, but most of them have their own limitations. Some sensors are good in terms of their response, but they are either very expensive or limited to one analyte. In order to detect multiple analytes, all sensors require a sequential approach, wherein only a single analyte is detected at any one time, the sensor needing purging before replacing with a new analyte to perform a new analyte detection. The other disadvantageous solution is to use multiple diverse sensors, each different one for a corresponding different analyte. Therefore, there has been no sensor proposed that can detect gas, bio, and chemical substances simultaneously.

With the invention, this problem, among others, is being addressed, overcoming the cost, and making this sensor capable of detecting any type of analyte and/or parameter. Hence, the term "simultaneous" detection refers to non-sequential detection, wherein at least two analytes can be detected at substantially the same time, as the sensor comprises a configuration designed for the detection of each analyte. Since the sensor comprises multiple configurations, one per analyte, it can detect them all at the same time, or substantially at the same time.

The term "analyte" is used as a broad term and is to be given its ordinary and customary meaning to a skilled artisan (and is not to be limited to a special or customized meaning), and refers to any substance which can be detected and is normally present within a medium, such as gas or fluid. Analyte refers to a substance or chemical constituent in a biological fluid (for example, blood, interstitial fluid, cerebral spinal fluid, lymph fluid or urine) that can be analyzed, or a substance or chemical constituent in a gaseous fluid (for example, sarin, DMMP, carbon dioxide, carbon monoxide, methane, hydrogen and so on) that can be analyzed.

Analytes can include naturally occurring substances, artificial substances, metabolites, and/or reaction products. Hence, each analyte also belongs to specific "analyte type", or family, which generates a similar SPR-induced property variation to an impinging light beam. Hence, the sensor of the invention is capable of determining first the type of analyte, and also within the type, the specific analyte present in the medium. Specific analytes, for example, in a biological solution, may include antibodies specific to distinct antigens (for example, for simultaneous detection of different types of virus in the same biological sample for example: identification of distinct COVID variants in a single biological sample. The skilled artisan is cognizant of analytes and all the different types of analytes. In the description, the term "analyte" is used interchangeably with the phrase "analyte, or analyte type".

For the detection of gases, specific gas responsive materials are used, for example:
- For CO₂, specific MOF coatings are used, that can selectively detect CO₂;
- For H₂, specific noble metal thin films (Pd, Pd-NPs or Ni) are used, that can selectively detect H₂;
- For NH₃, noble metal thin films (Au or Ag) coated by specific material (Silica) are used that can selectively detect NH₃
- For nerve agents, such as Sarin (or its simulant DMMP), specific bimetallic thin films (Au-ZnO and Cu-ZnO) are used that can selectively detect Sarin;
- A biochemical study of phenol ion detection can be conducted using an enzyme-entrapped hydrogel coating. The enzyme-entrapped hydrogel coating can be used to select phenol ions;
- For glucose detection, enzyme-entrapped graphene layers or metal-oxides thin films coated graphene layers are used;
- For viruses (respiratory), bilayer of a noble metal thin film (Au or Ag) and a specific transition metal dichalcogenide (PtSe₂) coated graphene are used;
- For hydrogen detection, for example, palladium is used as both the plasmonic metal and the sensor layer;
- For biosensors, coating the metal with a layer of specific proteins, either antigen or antibody, that forms a film of approximately 5 to 20 nm over the metal surface. This layer is exposed to the analyte containing the complementary antibody (or antigen), and a response is observed when the counterpart molecules react, yielding a change of either organic layer thickness or equivalently, effective refractive index.

A variety of parameters affect the performance of an analyte. These parameters characterize the performance depending on the analytes. For the detection of a specific gas analyte, the temperature, pressure, and concentration of gas can affect this detection; for the detection of a phenol, the temperature, pH, and concentration of the analyte can characterize the sensor. Therefore, it can be said that the parameter can be used to characterize the performance of a specific analyte.

The term "parameter" will be used as a broad term and is to be given its ordinary and customary meaning to a skilled artisan (and is not to be limited to a special or customized meaning), and refers, for example and in a non-limiting manner, to measurements of light properties, such as SPR curve, light intensity or wavelength, when detecting examples of specific analyte types given previously. The skilled artisan is cognizant of these parameters and the experimental setup necessary to determine them. In the description, the use of the term "parameter" is meant to refer to "parameter, or property". In one example implementation, TM polarized (p-polarized) light using a single laser is emitted. Polarization occurs parallel to the plane of incidence and can be manipulated by using a linear polarizer.

The SPR-based sensor according to one embodiment of the invention comprises at least one detection section. The detection section is configured to receive the medium (fluid or gas) containing the at least one analyte to be determined, and further comprises a plurality of segments, wherein each segment comprises a sensing layer configured to enter into contact with the medium comprising the at least one analyte and configured with a different configuration per analyte or analyte type. The plurality of sensing layers have a common intersection zone onto which at least one light beam is impinged and from which at least one light beam is reflected off, the at least one reflected light beam comprising at least one response parameter per segment induced by a surface-plasmon response simultaneously generated from the interaction of the at least one impinging light beam with the common intersection zone and the at least one analyte to be determined, the at least one response parameter per segment allowing the determination of the at least one analyte present in the medium. In one aspect, the medium is held inside a chamber (or microchamber), allowing contact between the medium and the at least one sensing layer.

The sensor system according to another embodiment of the invention comprises at least one SPR-based sensor, at least one light excitation source, at least one receiver module, and at least one controller. The light excitation source is configured to emit light onto the at least one sensing layer of the detection section. The receiver module is configured to receive the light reflected off the detection section once it has interacted with the medium containing the analyte and under the influence of the SPR effect of the sensing layer, and the controller is configured to determine the type of analyte as a function of a determined change in a light parameter.

Simultaneous multi-analyte sensing is enabled by the detection section comprising a plurality of segments, each segment comprising a sensing layer which is configured for a particular analyte, and wherein the plurality of segments share a common intersection zone. The light excitation source is configured to emit at least one light beam onto the common intersection zone. As the light beam impinges on all sensing layers present in the common intersection zone, the different analytes of the plurality of segments cause different SPR effects, each respectively affecting the light beam differently as it reflects off the common intersection zone. The receiver module receives the at least one reflected light beam and the controller determines the analyte as a function of at least one changed parameter, or property, of the at least one reflected light beam. In this manner, each parameter change is indicative of an analyte and the controller can determine the analyte as a function of the parameter change. Therefore, if multiple analytes are present in the medium, the sensor determines them all simultaneously.

In one example implementation, the detection section comprises a single chamber for holding the medium allowing the plurality of segments to be all in contact with the medium. The single chamber comprises an inlet for allowing the entry of the medium and an outlet for allowing the exit of the medium. In another example implementation, the detection section comprises a plurality of compartments, each compartment comprising a segment and a chamber for holding the medium allowing its respective segment to be in contact with the medium. In this case, each compartment comprises its own inlet and outlet port.

In one aspect, a single light beam is reflected, however multiple parameters of the single light beam are modified, each parameter being associated to a different analyte. In this manner, the change in parameter value is indicative of the presence of that specific analyte. In another aspect, multiple light beams are reflected, and the receiver module is configured to receive them all, and the controller analyses each one of them to determine the change in light parameter of each one of them. The multiple light parameter changes are indicative, each, of an analyte.

Hence, the sensor system comprises a detection section comprising a plurality of segments configured to enter into contact with at least one analyte, wherein each segment comprises a sensing layer configured with a different configuration per analyte, and wherein the plurality of sensing layers have a common intersection zone, a light excitation source configured to emit at least one light beam onto the common intersection zone of the detection section, a receiver module configured to receive the at least one light beam reflected off the common intersection zone and to determine at least one light response parameter, per segment, simultaneously generated from the interaction of the at least one light beam with the common intersection zone and the at least one analyte to be determined, and at least one controller configured to determine the analyte as a function of the determined response parameter per segment.

In some implementations, the at least one detection section comprises a plurality of segments, each segment comprises a sensing layer optimized for a specific analyte, or analyte type (or family). The plurality of sensing layers are configured such that they have a common intersection zone. A boundary is defined as the interface between two segments. Hence, the plurality of sensing layers share a common zone where each boundary is in close proximity to the remaining boundaries.

Different types of fabrication techniques can be used to deposit metals to serve as plasmonic materials that support surface plasmon oscillations or dielectric materials of several types overcoating the plasmonic metal films, such as mentioned earlier, to serve as plasmonic sensor layers. Examples of fabrication techniques include thermal evaporation, chemical vapor deposition, sputtering, and atomic layer deposition. Depending on the technique used, the deposited material will have a specific roughness and residual stress. It is likely that roughness variations will have a significant effect on the sensor's performance. Sensing area and material thickness will also have an associated residual stress that can deform or even detach the sensing layers. It is therefore necessary to use appropriate techniques for the deposition of these materials if fabricating the sensor for high accuracy. Masks are used to define the shape of each segment during fabrication, and the mask shape depends on the sensor design to be achieved. The sensor is usually manufactured with only one segment exposed for the metal layer deposition at any given time, while other segments are hidden with masks.

The proposed multianalyte sensor is manufactured using metal deposition over a mask to define the different section materials and shapes. The multiple materials are deposited inside metal deposition chambers using a rotating metal mask. Also, photoresist can be used to produce a removable mask using lift-off or plasma etching according to each section of material. The precise construction details are out of the scope of this description, and the skilled artisan is capable of manufacturing the sensor as long as it is designed according to the features described herein.

For metals, silver (Ag) or gold (Au), can be used as they exhibit the highest quality factor for the SPR effect, which is important for optical sensing. Gold has advantage of not being reactive with the environment, therefore, being stable for long term operation. The skilled artisan can reference widely available literature for the optical constants of the metals employed to observe the SPR effect and project devices.

The Otto configuration allows using thicker metals compared to the Kretschmann configuration. Thus, when properly designed, the Otto configuration can be used to produce improved sensitivity sensors that require small analyte volumes. In the Kretschmann-Raether configuration, the materials are patterned on a substrate (the prism itself). In the Otto configuration, deep reactive ion etching of silicon is used to form the cavities. Also, micro-molding using thick photoresists or 3D printed structures are used to produce a stepped Otto configuration.

The shape of the detection section may be planar, spherical or have vertical sides. The planar version is made on a substrate with stacked material layers, the spherical design can be made using PDMS, polyimide or SU8 structures used as molds. 3D printed resin structures can be used for either making the mold or the spherical structures. Vertical sloped walls are obtained using chemical etching on silicon, allowing vertical sloped walls metalized with different active materials for multianalyte detection. The spherical and sloped walls are used to reflect the incoming light in defined directions per analyte of interest in the Otto configuration. The planar design is used with an incident angle on the multi-material region in both Kretschmann-Raether and Otto configurations.

There is at least one light excitation source. Besides, these configurations allow the detection of hydrophobic and hydrophilic analytes (fluids or gases) simultaneously without the influence of cross-contamination of the measurements owing to the optimization of the adjacent segments and their package, allowing miniaturization of the SPR based sensor with reduced consumption, and analyte waste management.

In some implementations, the at least one light excitation source comprises at least one light source, which can be for example other monochromatic light sources including semiconductor lasers that emit monochromatic radiation in the near infrared. This depends on choice of the operation wavelength. The choice of operating wavelength is a function of the specific apparatus used to develop the sensor system and thus a project parameter. Selecting a light source wavelength will affect the position of the SPR plasmonic dip (reflected spectrum). Due to the phase-matching condition, a particular wavelength of light is projected according to the analyte of interest and the related plasmonic and sensitive materials used in sensor design. The light source must be monochromatic/polychromatic and p-polarized (TM-polarized). Although the invention is described using light, however, a laser diode array or a LED array can also be used, which radiates several light beams at different wavelengths, whose polarized components of light can be adjusted by using basic polarization techniques and optical components. Also, it is feasible to use a broadband light source (for wavelength interrogation) if certain arrangements are performed (by combining current and/or future electro-optical components and connectors). The wavelength of the source can vary from terahertz frequencies all the way to ultraviolet wavelengths.

A variety of prisms are available with different refractive indices, such as CaF₂, BK7, BAF10, BAK1, SF5, SF10, SF11, and so on, for light coupling. Use of BK7 glass prism is very common in SPR experiments. A Helium Neon He-Ne laser generates monochromatic light at a wavelength of 633 nm, that can be emitted polarized in the incidence plane, as required for observation of the SPR effect. If not polarized, a simple polarizer component can be placed in the transmission path of the light beam, prior to illumination of the BK7 prism. The BK7 prism is therefore considered the first layer of the best performance sensor. The light source is not limited to the He-Ne laser. Several other options of laser sources are widely available in the market and can be employed. For example, an operation wavelength in the near infrared portion of the spectrum (975.1 nm < λ < 1600 nm) can be used.

As the laser beam is incident exactly at the boundary between the intersection section, each section of the proposed SPR sensor equally contributes to the final reflectivity of the signal. In one aspect, the light source is monochromatic and p-polarized (TM-polarized). In another aspect, the light source is a source of white light. In yet another aspect, the light source is laser adapted to the SPR prism coupling.

In some implementations, the at least one receiver module comprises at least one light detector, a transducer to convert light into an electrical signal, and a parameter module to determine different parameters of the received light. The light detector can detect the polarized light (TM and TE) of the reflected beam. The light detector should have a detection range according to sensor design. The light detector can be a general-purpose photodiode, a CCD (charge coupled device) sensor, a CMOS (complementary metal-oxide-semiconductor) sensor, a photodiode array optically connected to proper components, an OSA (Optical Spectrum Analyzer), or optical power-meter. The receiver module can be designed to improve the accuracy of detection by filtering out the background noise. The receiver module can detect through the reflected light reached at the detector, the change in refractive index, giving as an output a variable voltage. The receiver module can be easily integrated into a proper multiplexed device, which allows the manipulation of two or more reflected/transmitted signals.

In some implementations, the at least one controller comprises a processor, or means of processing, and a memory, or means of storage. The memory stores, amongst others, program code instructions to execute steps of a process once executed by the processor. The memory also stores data generated from the process, for example, the light parameters received, the received electrical signal representing light parameters, any intermediate calculations, or other values, such as mean and standard deviation. The memory also stores a lookup table matching each analyte with its corresponding parameters as well as each parameter to its corresponding threshold range, described according to certain aspects of the invention.

The controller is configured to analyze the reflected light signal with signal processing techniques to obtain light parameters of interest, such as the resonance angle/wavelength, the reflected/transmitted intensity, centroid, figure of merit FOM, or full width at half maximum FWHM among others; as well as to store them in the memory. The controller can be designed to communicate with a PC by using a wired link such as RS-232 or USB, or wireless link such as WiFi, WSN, Bluetooth, and LoRa, among others. The controller can be designed to compare previous values of the characterized sensor allocated in a data file as a reference, with current real time measured values to estimate sensor response. In some aspects, for multianalyte sensing, predictive machine learning algorithms can be used to train the sensor according to multianalyte sensor parameter detection. In one example implementation, the controller is calibrated and trained through predictive models to identify the reflected light intensity level at different wavelengths, which allows discriminating between analytes. Since each analyte will have its own intrinsic fingerprint, referring to measured parameters according to sensor design tailored to targeted analytes. It is also possible to deposit two different metals coated with the same dielectric material having a single thickness. In another example implementation, the controller comprises a look-up table with all predetermined relations between metal and/or selective material thicknesses, and light properties. As a function of the measured parameters of the light response, the look-up table provides the most likely analyte in the medium under test.

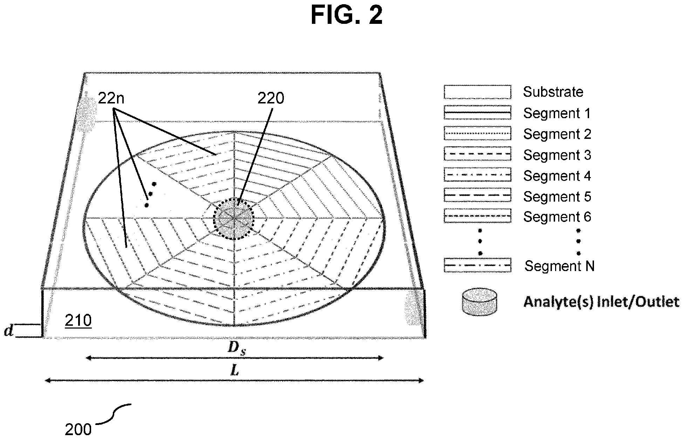

**FIG. 2** depicts a schematic representation of one example implementation of the multi-analyte/parameter SPR-based sensor 200 comprising a microfluidic chamber 210 configured to receive the medium comprising the at least one analyte to be detected. The detection section is divided into a plurality of segments 22n (1, ..., n, ..., N) each configured to enter into contact with the medium comprising at least one analyte from the chamber. All segments are probed by a single laser beam that images all segments simultaneously in a small region around their intersection point. This region, occupied by the laser footprint, is the "common intersection zone" 220 (shadowed region). Each segment contributes to the final signal. Each segment is configured following a specific sensor type, such as Kretschmann-Raether or Otto. However other sensor configuration types are also possible, as long as they permit a common intersection zone between sensor layer boundaries. Therefore the detection section can comprise a combination of different sensor configurations.

The configuration of each individual segment depends on the analyte to be sensed. In this implementation, all segments contribute equally to the reflected light response. The chamber comprises at least one inlet configured to allow the entry of the medium into the sensor, and at least one outlet configured to allow the exit of the medium from the sensor. The sensor's dimensions are defined by its length L, and the maximum length Dₛ and depth d of the detection section. As mentioned, the present invention allows the detection of all sensor segments simultaneously through the common intersection zone between sensor segments.

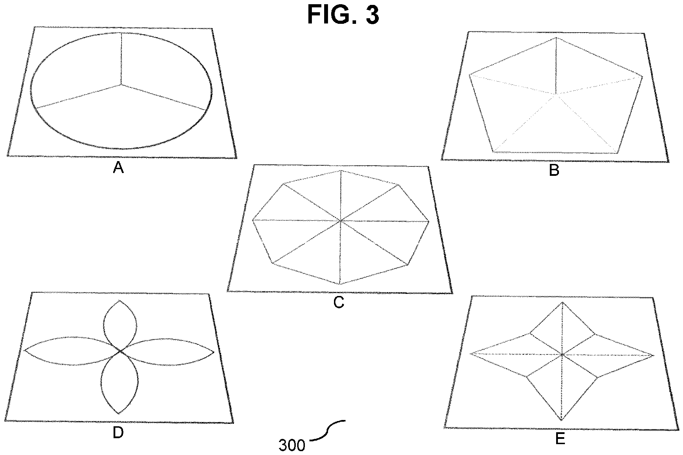

**FIG. 3** illustrates several example implementations of detection section 300 geometries, wherein each detection section has a different shape; circle (A), pentagon (B), octagon(C), flower (D) and star (E). Other geometries are also possible as long as they permit a common intersection zone between sensing layers. Each implementation depicts a different detection section shape, however all of them conform with the requirement that they comprise a plurality of sensing layers with a common intersection zone. A boundary is defined as the interface between two sensing layers. Hence, the common intersection zone is where each boundary is in close proximity to the remaining boundaries.

It is advantageous to use variable shapes to provide flexibility when defining analyte chamber sizes and shapes and to optimize the input/output of the analyte during detection. Sensor performance can also be affected by symmetry structures. These types of sensors can provide the symmetry which enhances performance results. The shape of the multianalyte sensor area is not limited to the shapes shown in the figure. The multianalyte sensing section may be planar, spherical or have vertical sides, 3D shapes such as spherical and pyramidal are used to reflect the impinging light in specific directions when used in the Otto configuration. It is apparent to the skilled artisan that other configurations and shapes are possible as long as they enable the configuration of a common intersection zone where all sensing layer boundaries are in close proximity.

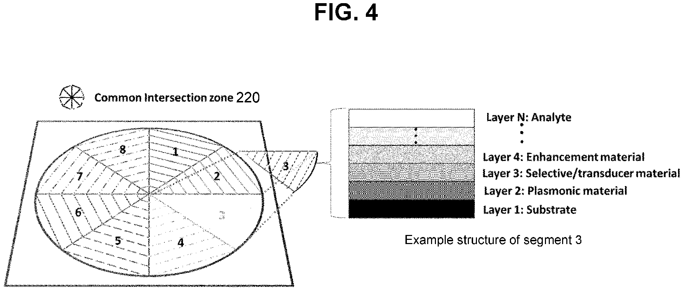

**FIG. 4** depicts a top-view schematic representation of an example implementation of the multi-analyte/parameter SPR-based sensor segmented into 8 equal segments with a common intersection zone (left figure) and the stacked layers representation for one segment (right figure). Sensor layers usually include at least three layers, namely: substrate, plasmonic material, and analyte, or sensing medium. According to the degree of compatibility between the plasmonic material and the prism, adhesion layers could be necessary to produce a seamless transition between layers. In some cases, however, two or more layers can be added between the plasmonic material and the analyte, such as a selective or transducer material, or an enhancement material for enhancing sensor performance. The refractive index of these materials is usually higher than that of plasmonic materials.

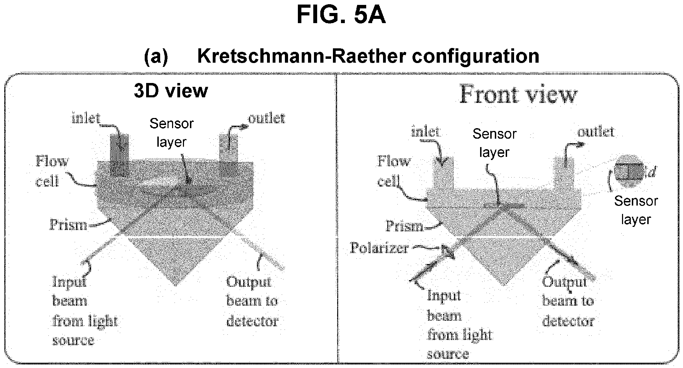

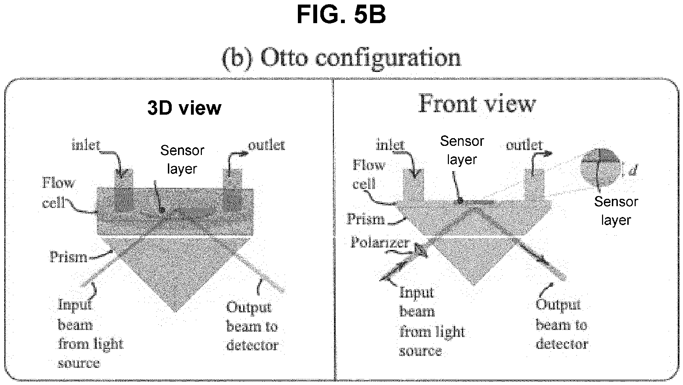

**FIG. 5** depicts a schematic representation of two example implementations of the prism coupling configuration: FIG. 5A depicts an example implementation based on the Kretschmann-Raether configuration, and FIG. 5B depicts an example implementation based on the Otto configuration. These illustrate the feasibility and scalability of the SPR-based configuration.

In **FIG. 5A****,** following the Kretschmann-Raether configuration, the sensor comprises an inlet and an outlet for allowing the medium in and out of the chamber of the sensor. The chamber is a flow cell wherein the medium is held, and, is attached to the detection section with, in this case, four analyte segments. As can be seen, the detection section is in contact with the prism at one of its sides, the same side as where the light impinges. The plurality of sensing layers are therefore in contact with the medium on the opposite side of the detection section.

The substrate upon which the multilayer structure is deposited with the plasmonic layer, is made of glass or polymer with high refractive index (n) equal or close to the refractive index of the coupling prism *nₚᵣᵢₛₘ.* Metal and dielectric refractive index values determine the phase characteristics of the resonance phenomenon. The plane polarized laser beam is emitted from one side of the prism and it impinges in the common intersection zone of the detection section. The light undergoes total internal reflection TIR and interacts with the multilayer structure containing the plurality of sensing layers (plasmonic sensor layers), having thickness d, resulting in a plurality of surface plasmons. When phase matching occurs, resonance dips, also known as reflection dips, are generated at particular angles of incidence, which are used for sensing since the degree of power dip as well as the angle at which it occurs is characteristic of the analyte being determined. A change in the physical properties of the analyte affect the SPR effect within each segment thus enabling the configuration to operate as an optical sensor.

In some implementations, the controller is configured to determine a response parameter per segment, as well as determine changes in the response parameter from emission to reception, such as intensity changes or angle shifts of the SPR dip per segment. So, the controller is configured to determine the at least one analyte present in the medium as a function of the determined response parameter per segment. In one aspect this can be implemented as a lookup table, wherein, the determined resonance dip and/or angle are associated with a particular analyte. Each analyte has its own response parameter profile which is a combination of resonance dip and angle.

**FIG. 5B** is a similar implementation, however based on the Otto configuration and, as can be seen, the detection section is attached to the chamber by one of its ends, leaving a separation for the medium to get into contact at the opposite end of the detection section. Hence, the detection section and the prism are separated by a section of the flow cell, or medium chamber, containing the medium. The plurality of sensing layers are therefore in contact with the medium on the same detection section side as the impinging light. In this case, the multilayer structure that includes the plasmonic metal film, is deposited on a substrate that can be either made of glass or even of semiconductor material, such as silicon, Gallium Arsenide GaAs, Germanium Ge or other similar type. CMOS grade silicon has the advantage of integrating electronics directly on the sensor. The sensor layer surface is maintained separated at a distance d from the bottom glass surface, and the SPR effect is measured from the reflected beam intensity as response parameter. The SPR effect also in this case is sensitive to the physical properties of the medium within the flow cell.

### Method

The multi-analyte sensor is operated using program code stored in a computer readable medium, and which is executed by at least one processor, in order to operate the different sensor components that allows the detection of spectral power levels and angles or wavelengths. The program code allows to identify and discriminate between analyte types and concentration simultaneously by processing the signal at the output of the receiver module. The program code identifies resonance dips (angle or wavelength) of the reflected signal to discriminate between analytes of interest.

A method of designing the sensor is provided according to one embodiment of the invention. In order to design and operate efficiently the SPR sensor the following design steps are performed:
1) The number of analytes to detect are determined
2) The proper prism is selected
3) A particular SPR sensor configuration is selected for each segment, to choose between Otto or Kretschmann - Raether, with one segment per analyte of interest. Other configurations are possible as long as they permit configuring the plurality of segments with a common intersection zone.
4) A particular metal, or combination of metals, is selected and configured with a particular thickness.
5) A particular selective material, or combination of selective materials, is selected and configured with a particular thickness.
6) The proper light source is selected, for example, at a fixed wavelength or a broadband white light source properly configured and optically connected/aligned to the prism. If the light beam from the light source is not p-polarized a polarizing filter is used.

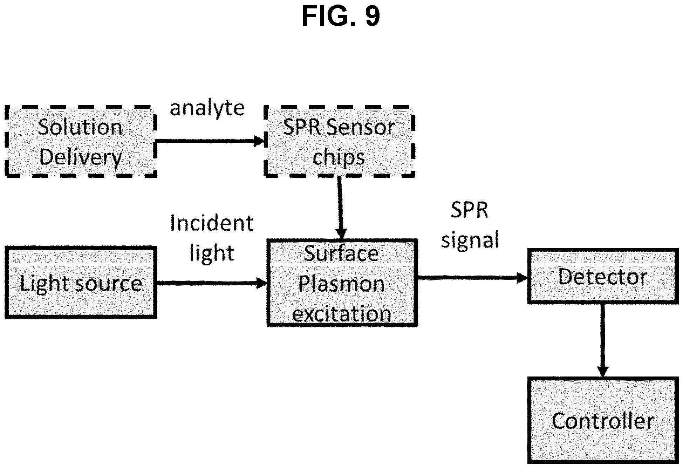

Once the sensor has been manufactured according to the designed configuration, it is ready for operation. **FIG. 9** depicts a general method of operating the sensor according to one embodiment of the invention. The medium comprising the at least one analyte is fed into the sensor chamber or chambers. The light excitation source is activated to emit light onto the common intersection zone at an angle exceeding the critical angle, causing excitation of the surface plasmon -in air-. The angle of incidence is adjusted until the resonance condition is met, which is typically achieved when the momentum of the incident light matches that of the surface plasmon. Binding events on the metal surface cause changes in refractive index, leading to shifts in the SPR angle. Once the reflected light reaches the light detector, it is converted to a voltage (proportional to the reflected/transmitted light intensity). The electrical signal is then converted to a digital signal that is transmitted to a processing unit for processing. This processing unit analyzes the data and outputs the type of analyte measured, based on software predictive models that correlated the resonance dips and corresponding wavelengths of the reflected/transmitted signal and discriminates between analytes of interest, providing a determination of which analytes were present in the medium. In another example implementation, the controller uses a pre-stored lookup table to identify the multiple analytes present in the medium as a function of the plurality of light response parameter changes. After this iteration, the sensor is ready for purging in order to perform a new SPR signal reading in case necessary.

### Example method implementation

The operational prism coupling arrangement in an Otto configuration for the detection of 2 analytes in normal environmental condition (Pressure, Temperature, and relative Humidity): Analyte 1 mercury ions in liquids and analyte 2 Sarin gas. The design has a microfluidic cell between the prism and the Otto configuration with two inlets and two outlets (one pair per analyte). The sensor design is attached to a prism made of BK7 glass and the Otto chip manufactured on CMOS grade silicon substrate for direct integration of electronics, on segment coated with chromium-gold Cr-Au (2 nm and 50 nm, respectively) and the other segment coated by titanium-gold-titanium-zinc oxide Ti-Au-Ti-ZnO (2 nm, 40 nm, 2 nm, 60 nm). The light source consists of a helium-neon He-Ne laser, which generates monochromatic and p-polarized light at a wavelength of 633 nm, which is well matched by the BK7 prism. The light beam is incident in the intersection zone of the Otto chip and reflected to the light detector. With no analyte, the Otto chip sensor attached to the prism and the microfluidic cell, is measuring only air (refractive index 1.0003 RIU) in both segments, then both inlets are open, and both segments are filled with the corresponding analyte. The reflected light spectrum is analyzed by the controller indicating the presence and concentration of mercury ions and sarin gas presence.

The method of simultaneous multianalyte sensing comprises the following method steps:
- Emit, from the light excitation source, a light beam (for example, p-polarized light) at a predetermined intensity/wavelength. The relevant parameters used for detection are light intensity, minimum reflectance value and wavelength;
- Receive, at the receive module, at least one light beam reflected from the common intersection zone of the detection section of the sensor;
- Determine, by the receive module, at least one response parameter of the at least one received light beam;
- Determine, by the controller, the at least one analyte as a function of the at least one determined response parameter.

In the following several example implementations of sensor configurations are set out.

### 1. Single metal used for designing multiple sensors

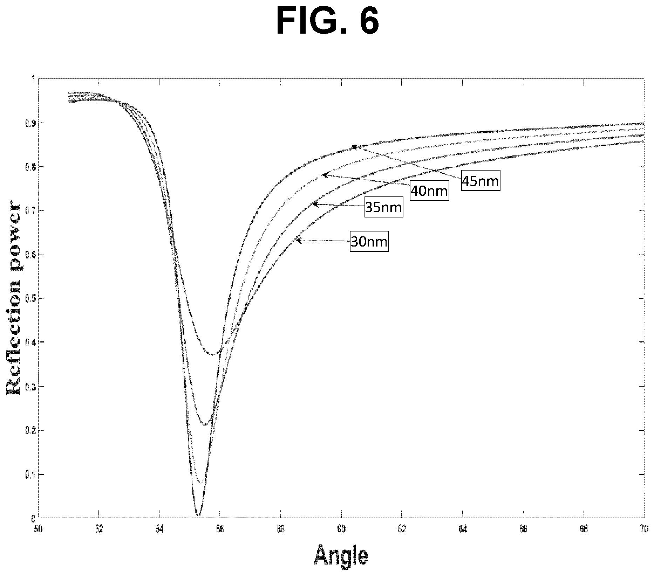

**FIG. 6** depicts an angle-dependent variation of the reflection power for several thicknesses of a single metal silver Ag. In one of the simplest cases, a metal (gold, silver, aluminum, rhodium Rh, palladium Pd, copper Cu, chromium Cr, and so on), or combination, is deposited on a transparent substrate. For the case of the Kretschmann-Raether configuration, the goal is to select a substrate whose refractive index is close to that of the prism so that the complexity of exciting the SPR phenomenon is reduced. Metal films can be deposited using a variety of techniques, including thermal evaporation, sputtering, molecular beam epitaxy, or atomic layer deposition. After this metal deposition, when a polarized beam of light is emitted from one end of the prism, reflected spectra can be seen on the other side of the prism. Depending on the material, the thickness of the metal film can range from 5 to 150 nm. Different plasmonic materials (metals) or metals with the best performance at different thicknesses can usually be considered, since the best SPR effect is observed at different thicknesses.

Similarly, a multianalyte sensor can be configured with the same plasmonic material however with different thicknesses by varying the thickness of the material, where sensor response (same plasmonic material) can be characterized by different intensities of the sensor. As the thickness changes, the intensity of the reflected light observed at the receiver module also changes. The use of different thickness of the same material allows for the fabrication of multianalyte sensors as each segment is fine tuned to a specific analyte by configuring it with a specific thickness. By configuring the segments with distinct specific layers and given that each segment resonance waveshape is located in a well defined and specific angular range, this allows uniquely identifying several distinct analytes simultaneously.

**TABLE I** lists the response parameters obtained from the different SPR profiles shown in FIG. 6, and depicts the dependency of the minimum reflectance and resonance angle on the thickness for the metal silver (Ag) at the wavelength of 633 nm (this wavelength has been selected just as an example). The design can be adapted and optimized to operate at any given wavelength from below infrared up to ultraviolet and beyond. This demonstrates how the same metal layer with different thicknesses can be employed to detect different analytes which will have a response at different profiles.

The sensor response is different for the same plasmonic material with different thicknesses. The difference in the intensity observed of the reflected light, between different analytes, is used to identify different analytes following a pre-mapping between different thicknesses of the same plasmonic material with different analytes. The SPR effect is positioned differently in two different plasmonic materials due to their intrinsic plasmonic properties. It is possible to distinguish different sensor responses without any confusion by using different materials for the preparation of different sensors. The dip positions in spectra can be used to identify the different materials used for the preparation of different sensors. Multiparameter sensors can also be designed using metal with different high-dielectric materials such as silicon Si, indium tin oxide ITO, zinc oxide ZnO, and so on.

**TABLE I**

| Dependency of the minimum reflectance and resonance angle on the metal thickness for the case of silver Ag at the wavelength of 633 nm. | | |
|---|---|---|
| **Ag Thickness (nm)** | **Reflection power (a.u.)** | **Resonance angle (degrees)** |
| 30 | 0.37 | 55.8 |
| 35 | 0.21 | 55.5 |
| 40 | 0.08 | 55.3 |
| 45 | 0.009 | 55.1 |

### 2. Simplified sensor design for two analytes

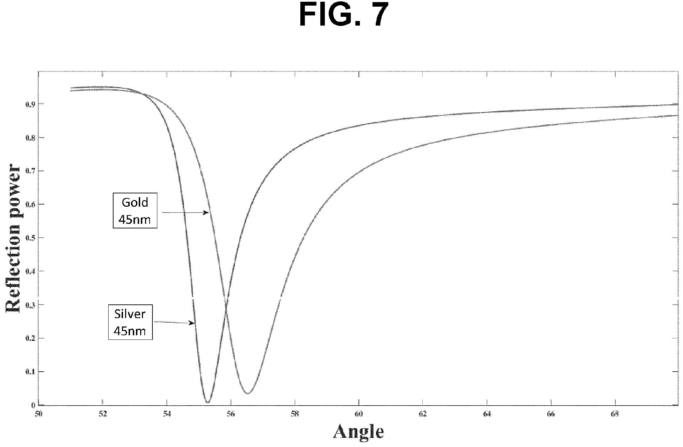

**FIG. 7** depicts an angle-dependent variation of the reflection power for two different metals (gold Au and silver Ag) of the same thickness (45 nm) with 1.34 as the outside refractive index. This example implementation considers a sensor with a detection section comprising two segments, wherein each segment is optimized for sensing an analyte, and wherein the light is incident at the common intersection zone of both segments. Sensor design is simplified by using a circular design, wherein one semi-circle is configured with one metal deposition and the other semi-circle is configured with another metal deposition.

Since different metal films have different refractive indices, resonance dips are generated at different angles, reducing crosstalk between the two sensing layers. This can be clearly seen in FIG. 7, where shifted SPR angular waveshapes of silver Ag and gold Au are shown, both having 45 nm thickness. The gap between the two resonance dips is indicative of reduced crosstalk. The calculation was carried out for the wavelength of 633 nm. Alternatively, the sensor can be configured based on the analyte response by varying the thicknesses of the two metals, in such a way that analytes can be distinguished in both segments, where each analyte will respond at a very specific angle. **TABLE II** depicts the corresponding resonance parameters.

**TABLE II**

| Resonance angles for gold Au and silver Ag, each having 45 nm thickness for the example wavelength of 633 nm. | |
|---|---|
| **Metal (45 nm)** | **Resonance angle (degrees)** |
| Ag | 55.1 |
| Au | 56.5 |

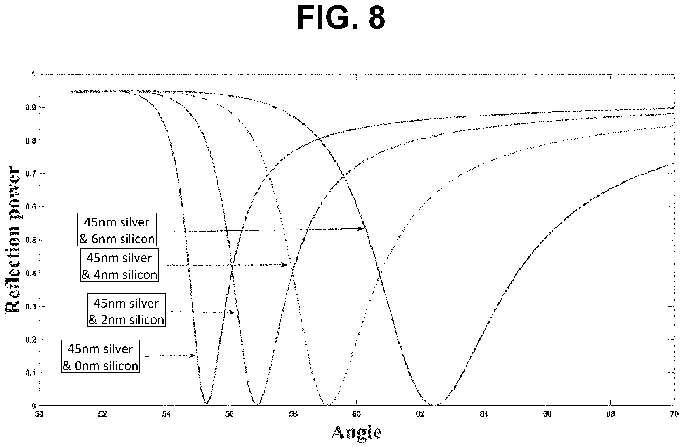

**FIG. 8** depicts an angle-dependent variation of the reflection power for one metal (silver Ag) of the same thickness (45 nm) at different thicknesses of dielectric material. The thickness of a metal film can be fixed, and any dielectric material can be deposited on it, such as silicon Si, silicon dioxide SiO₂, zinc oxide ZnO, tin oxide SnO₂, indium tin oxide ITO, and similar. Any of these materials can be deposited with two different thicknesses or two different materials of the same thickness. FIG. 8 shows the effect of depositing a thin silicon Si film on a silver Ag metal film, on the SPR curve. **TABLE III** lists the modifications produced by addition of the thin dielectric Si film on Ag.

**TABLE III**

| Shift in resonance angle, silicon Si coated silver Ag film calculated at the example wavelength of 633 nm. | | |
|---|---|---|
| **Ag thickness (nm)** | **Si thickness (nm)** | **Resonance angle(degrees)** |
| 45 | 0 | 55.1 |
| 45 | 2 | 57.1 |
| 45 | 4 | 59.3 |
| 45 | 6 | 62.3 |

As can be seen, for the same metal thickness, as the dielectric thickness increases, the angle of the reflected light beam at the resonance dip increases accordingly. This observation permits configuring each segment to a particular analyte, and calibrate the controller accordingly. For example, during real-time sensing, if the receiver module determines that the response parameter of the minimum reflected light is at an angle of 57°, the controller then determines the particular analyte which is present.

### 3. Example of three analytes

To detect three analytes, the circular substrate is divided into three segments equally.
(a) A different metal layer is used for each segment, and all metal layers and sensors having a common intersection zone.
(b) The same metal layer can be considered with different thicknesses.
(c) It is possible to consider the same metal layers with different dielectric materials or the same dielectric material with different thicknesses.
(d) Different metals and dielectric materials can be used in each segment.

### 4. For N analytes

For an N-analyte implementation, each segment is carefully optimized for a specific analyte. This comprises selecting carefully each metal, metals thickness, and metal/dielectric material combinations. Each sensor segment is designed for a specific analyte detection.

### 5. Alternative sensor pattern configurations

The circular design of the detection section is an ideal case for the simultaneous detection of many analytes. In the case of few analytes, the geometric design of the detection section can be varied, which makes manufacturing more efficient. The following cases can be considered:
1) A sensor can be designed and manufactured in rectangle or square shape for two analytes, thus there is only one single interface between segments. Sensor performance is highly influenced by the sensor's dimensions. Considering the objective of configuring a multianalyte sensor, a symmetric structure is required to allow equal plasmonic effects for each sensor in order to reduce crosstalk. This will reduce the complexity of the sensor performance study. In addition, the sensor performance will not affect the sensor dimensions when it is differentiated. Therefore, the detection section is configured with symmetric segment configuration in order to reduce crosstalk.
2) To manufacture a sensor for three analytes, an arbitrary shape can be considered and further divided into three segments.
3) For four analytes, a square, rectangle or arbitrary shape is considered, and further divided into four segments. All the detection section segments should have a common intersection zone which can be used to observe the SPR phenomenon for all segments simultaneously.
4) Considering any single one sensor configuration, this type of sensor can detect ultraviolet UV, visible, and infrared IR analytes. In order to achieve resonance in this particular angle/wavelength region, only the right material and thickness needs to be chosen. Many analytes respond better to different wavelength regimes. The sensor has been observed to operate in ultraviolet UV, visible, infrared and THz regions. The correct combination of materials and thicknesses are carefully configured in order to get the best performance, which is dependent on the wavelength regime being used.
5) A wide range of sensor detection can be achieved with these SPR sensors by using a single chip. These chips can be used as tunable sensors since they can be designed for different wavelength/angle sensors. If all the sensors have the SPR effect at different wavelengths/angles, any change in multiple sensor responses can be monitored simultaneously. All sensors have different resonance angles, so the change observed in any sensor is determined by the change of its resonance angle.
6) The proposed sensor eliminates the need for multiple lasers and detectors, reducing device size and cost.
   Conventionally, each segment would need its own light emitter-receiver pair. However, the current sensor design only requires a single light excitation source and a single light response receiver. In other words, the need for the usually required multiple lasers and detectors is eliminated.
7) Using smart design, the same single sensor is used to detect gas, bio and chemical analytes within the same chip.

An example of this is demonstrated by configuring three different segments. Each segment is specified for each respective analyte. Most commonly, triangular segments can be used for this type of multiparameter analysis. It is possible to include one gas sensor, one chemical sensor, and one biosensor in this scenario.

### 6. Other example implementations

In some implementations, the number of components can be further reduced. For example, the number of light sources for several light beams. It is possible to design the sensor for the same excitation wavelength but with different materials to obtain different responses. Alternatively, a white light source is implemented to design the sensor to operate with several wavelengths per parameter. More than one light source can be used with different wavelength or power.

In some implementations, multiple reflected light beams are received. The intersection zone when used to reflect the incoming light in multiple directions, implemented in Otto configuration results in detection at different spatial positions, sometimes requiring more than one detector. The light parameters at each position are light intensity and wavelength.

In some implementations, several analytes are determined from a single reflected light beam. A single light beam incident at the intersection zone will produce one reflected light spectral response, containing more than one minimum identifiable reflection point, that allows discriminating between analytes of interest.

In some implementations, the controller is configured to determine whether the difference between two or more light parameter changes is within a predetermined threshold range. In case true, it concludes that the multiple readings in fact relate to the same analyte. By calculating the mean of all readings which fall within the threshold range, a more accurate determination is made of that analyte.

This is particularly noticeable in the example scenario wherein the medium comprises only a single analyte. In this manner, the two or more light parameter changes serve to calibrate the sensor. The predetermined threshold range is set as the range of light parameter changes generated for a single analyte. Henceforth, this predetermined threshold range can be used to determine more accurately which analyte is generating such observed light parameter changes.

In some implementations, wherein the controller has been calibrated for a plurality of analytes, and has been configured with a plurality of predetermined threshold ranges, the use of these threshold ranges improves the accuracy of the determination of which analytes are present, since the plurality of threshold ranges separate the multiple light parameter change readings into groups, each group pertaining to a specific analyte.

In some implementations, the percentage of each analyte present in the medium is estimated as an inverse function of the number of determined analytes. For example, a sensor could be configured to determine up to 20 different analytes, however, when sensing a medium, the controller determines the presence of only 5 analytes. In this case, the proportion of each analyte in the medium is one fifth, or 20 %.

In some implementations, the proportion or concentration of each analyte can be estimated more accurately by using the mean obtained from the plurality of light parameter change readings corresponding to the same analyte. The more presence of a particular analyte is correlated to a smaller variance, or standard deviation, around the mean. In other words, the smaller the variance, the higher the analyte's proportion within the medium. Taking an example of 2 analytes determined to be present from a possible 20, the preliminary estimation is that each analyte is present in a proportion of 50%. However, if the variance corresponding to the first analyte is 500, the variance corresponding to the second analyte is 1000, then the preliminary estimation is modified to represent a proportion of the first analyte of 66.6% and of the second analyte of 33.3%.

Detection of biological, chemical, and gas analytes can be performed simultaneously using the present invention. As an example, three segments are configured to measure urea (bio sensor), chromium ions (chemical sensor), and carbon dioxide CO2 gas (gas sensor). An example configuration comprises three segments with an intersection area containing plasmonic materials deposited at certain thicknesses (thickness varies by material) or the deposition of different plasmonic materials for each segment or the deposition of the same plasmonic material at a fixed thickness and a different dielectric material with different thickness. These configurations generate different resonance wavelengths for each respective different analyte. In this manner, different sensing regions are distinguished without causing any crosstalk.

Different techniques can be used for depositing these materials, such as sputtering, thermal evaporation, ALD, and so on. In order to detect different types of analytes simultaneously, sensing materials are deposited that are specific for detecting those analytes. A layer of enzyme-entrapped gel or graphene for detecting urea can be deposited, or molecular imprinting technique for chromium can be deposited, or ATAC doped hydrogel can be deposited, or another sensing layer can be deposited, or metal-organic framework MOF, or doped graphene, or another sensing layer to detect carbon dioxide CO2 can be used.

The spectra of different analytes can change with the concentration of the analytes. Spectra is shifted according to analyte concentration. With the proposed invention, discrimination between analytes and their concentration is performed. This is an example of a simple sensor that may be used for a wide range of analytes or multiple analytes simultaneously.

Each of the multiple sections for sensing are designed to react to a given analyte, for example for hydrogen sensing, a film of palladium is used. Toxic chemical compounds, such as nerve agents are detected using metal oxides, such as ZnO. Temperature sensing sections can be performed using selective materials such as Polydimethyl siloxane (PDMS), Polymethyl methacrylate (PMMA) or Norland Optical Adhesive (NOA81). Biochemical detection selective materials can be MXene, PtSe2, WS2 or inorganic 2-dimension material layers.

In the proposed invention, the selective material is chosen appropriately according to the analyte of interest, the selective material is chosen due to changes in optical properties when in contact with the analyte of interest. The thickness of the plasmonic and selective materials for sensing are chosen according to the wavelength of operation and configuration of a given design.

Hence, different aspects of the invention present a novel and improved SPR-based sensor capable of simultaneously detecting a plurality of analytes present in a medium, such as gas or liquid. This enables a more cost-effective sensor, which does not have to be purged in order to detect different analytes, that is light and occupies little space for its integration onto an autonomous vehicle which enters a contaminated zone, and which is particularly suitable as it keeps human operators out of the contaminated zone and away from hazardous analytes. At the same time, it enables the simultaneous detection of different types of analytes, and maximizes detection quality and speed, as it operates in real-time.

Furthermore, it is to be understood that the embodiments, realizations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

The various means may comprise software modules residing in RAM memory, flash memory, ROM memory, EPROM memory, EEPROM memory, registers, hard disk, a removable disk, a CD-ROM, or any other form of storage medium known in the art.

The various means may comprise logical blocks, modules, and circuits may be implemented or performed with a general-purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The various means may comprise computer-readable media including, but not limited to, magnetic storage devices (for example, hard disk, floppy disk, magnetic strips, etc.), optical disks (for example, compact disk (CD), digital versatile disk (DVD), etc.), smart cards, and flash memory devices (for example, EPROM, card, stick, key drive, etc.). Additionally, various storage media described herein can represent one or more devices and/or other machine-readable media for storing information. The term machine-readable medium can include, without being limited to, various media capable of storing, containing, and/or carrying instruction(s) and/or data. Additionally, a computer program product may include a computer readable medium having one or more instructions or codes operable to cause a computer to perform the functions described herein.

What has been described above includes examples of one or more embodiments. It is, of course, not possible to describe every conceivable combination, or permutation, of components and/or methodologies for purposes of describing the aforementioned embodiments. However, one of ordinary skill in the art will recognize that many further combinations and permutations of various embodiments are possible within the general inventive concept derivable from a direct and objective reading of the present disclosure. Accordingly, it is intended to embrace all such alterations, modifications and variations that fall within scope of the appended claims.

## Claims

1. Sensor (200) for the simultaneous detection of multiple analytes present in a medium, the sensor comprising a detection section configured with a plurality of segments (22n), wherein each segment comprises a sensing layer configured to enter into contact with the medium comprising the at least one analyte and configured with a different configuration per analyte or analyte type, and wherein the plurality of segments are configured with a common intersection zone (220) around their intersection point onto which a single light beam is impinged and from which a single light beam is reflected off, wherein an interface between two sensing layers of two adjacent segments is a boundary and wherein the common intersection zone is where each boundary is in contact with the remaining boundaries, the reflected light beam comprising at least one response parameter per segment induced by a surface-plasmon response simultaneously generated from the interaction of the impinging light beam with the common intersection zone and the at least one analyte to be determined, the at least one response parameter per segment allowing the determination of the at least one analyte present in the medium.

2. The sensor of claim 1, wherein the detection section comprises a chamber (210) configured to receive the medium allowing contact between the medium and the at least one sensing layer of the plurality of segments, or wherein the detection section comprises a plurality of compartments, each compartment comprising a segment and a chamber for holding the medium allowing its respective sensing layer to be in contact with the medium.

3. The sensor of claim 1, wherein the shape of the detection section is a circle, or pentagon, or octagon, or flower, or star, or planar, or spherical, or square, or rectangle, or comprises vertical sides, or 3D shaped, or spherical, or pyramidal, or any arbitrary shape permitting the configuration of a common intersection zone.

4. The sensor of claim 1, wherein each segment is configured following the Kretschmann-Raether configuration, or the Otto configuration, or any other configuration allowing a common intersection zone between segments.

5. The sensor of claim 4, wherein the plurality of segments comprise:
the same metal layer at a different thickness in each segment;
or the same selective material layer however at a different thickness in each segment;
or a different metal layer in each segment with the same thickness;
or the same metal layer of the same thickness however with different dielectric materials or the same dielectric material at different thicknesses;
or any other combination of these that allows for analyte differentiation.

6. The sensor of claim 1, wherein the at least one response parameter comprises, at different angles, at least one of SPR curve, or minimum reflectance value, or light intensity, or wavelength, or change in refraction, or index resonance angle/wavelength, or reflected/transmitted intensity, or centroid, or figure of merit FOM, or full width at half maximum FWHM.

7. Sensor system for the simultaneous detection of multiple analytes present in a medium, the sensor system comprising:
at least one sensor (200) according to claim 1;
at least one light excitation source configured to emit a single light beam onto the common intersection zone configured around the intersection point of the plurality of segments of the detection section of the at least one sensor, wherein an interface between two sensing layers of two adjacent segments is a boundary and wherein the common intersection zone is where each boundary is in contact with the remaining boundaries;
at least one receiver module configured to receive a single light beam reflected off the common intersection zone and configured to determine at least one response parameter, per segment, induced by a surface-plasmon response simultaneously generated from the interaction of the light beam with the common intersection zone and the at least one analyte to be determined; and
at least one controller configured to determine the at least one analyte present in the medium as a function of the determined at least one response parameter per segment.

8. The sensor system of claim 7, wherein the at least one light excitation source comprises a monochromatic light source such as a semiconductor laser or monochromatic and p-polarized light source, or a TM-polarized light source, or a helium-neon light source, or a white light source, or a laser diode array, or an LED array, or a broadband light source, or any light source with an operation wavelength in the near infrared portion of the spectrum, such that its wavelength is within the range of 975.1 nm < λ < 1600 nm.

9. The sensor system of claim 7, wherein the at least one receiver module comprises at least one light detector, a transducer configured to convert the detected light into an electrical signal, and a parameter module configured to determine different response parameters of the received light.

10. The sensor system of claim 7, wherein the controller is configured to determine the at least one analyte from a lookup table of associations between response parameters values or changes and corresponding analytes or from prediction means configured to determine based on predictive machine learning algorithms.

11. The sensor system of claim 7, wherein the at least one controller comprises a processor, or means of processing, and a memory, or means of storage, comprising program code instructions to determine the at least one analyte present in the medium as a function of the determined at least one response parameter per segment by determining changes in the response parameter from emission to reception, such as intensity changes or angle shifts of the SPR dip per segment.

12. Method in a sensor system according to claim 7 of simultaneous detection of multiple analytes present in a medium, the method comprising:
emitting, by at least one light excitation source, a single light beam onto the common intersection zone configured around the intersection point of the plurality of segments of the detection section of the sensor, wherein an interface between two sensing layers of two adjacent segments is a boundary and wherein the common intersection zone is where each boundary is in contact with the remaining boundaries, the detection section comprising the medium;
receiving, by at least one receiver module, a single light beam reflected off the common intersection zone and determining at least one response parameter, per segment, induced by a surface-plasmon response simultaneously generated from the interaction of the light beam with the common intersection zone and the at least one analyte to be determined; and
determining, by at least one controller, the at least one analyte present in the medium as a function of the determined response parameter per segment.

13. The method of claim 12, comprising:
determining the at least one analyte as a function of the at least one response parameter per segment by determining changes in the response parameter from emission to reception, such as intensity changes or angle shifts of the SPR dip per segment;
or determining whether the difference between two or more light parameter changes is within a predetermined threshold range and determining the analyte as a function of the mean of all readings which fall within the threshold range;
or determining the percentage proportion of each analyte present in the medium as an inverse function of the number of determined analytes;
or modifying the determined percentage proportion as an inverse function of the variance of the analyte in comparison to remaining analytes.

## Patentansprüche

1. Sensor (200) zur gleichzeitigen Erkennung mehrerer in einem Medium vorhandener Analyten, wobei der Sensor einen Erkennungsabschnitt umfasst, der mit einer Vielzahl von Segmenten (22n) konfiguriert ist, wobei jedes Segment eine Sensorschicht umfasst, die so konfiguriert ist, dass sie mit dem Medium, das den mindestens einen Analyten umfasst, in Kontakt kommt, und die pro Analyt oder Analyt-Typ mit einer unterschiedlichen Konfiguration konfiguriert ist, und wobei die Vielzahl von Segmenten mit einer gemeinsamen Schnittzone (220) um ihren Schnittpunkt herum konfiguriert ist, auf die ein einzelner Lichtstrahl auftrifft und von der ein einzelner Lichtstrahl reflektiert wird, wobei eine Schnittstelle zwischen zwei Sensorschichten zweier benachbarter Segmente eine Grenze ist und wobei die gemeinsame Schnittzone der Ort ist, an dem jede Grenze mit den übrigen Grenzen in Berührung ist, wobei der reflektierte Lichtstrahl mindestens einen Antwortparameter pro Segment umfasst, der durch eine Oberflächenplasmonantwort induziert wird, die gleichzeitig durch die Interaktion des auftreffenden Lichtstrahls mit der gemeinsamen Schnittzone und dem mindestens einen zu bestimmenden Analyten erzeugt wird, wobei der mindestens eine Antwortparameter pro Segment das Bestimmen des mindestens einen im Medium vorhandenen Analyten ermöglicht.

2. Sensor nach Anspruch 1, wobei der Erkennungsabschnitt eine Kammer (210) umfasst, die so konfiguriert ist, dass sie das Medium aufnimmt, wodurch ein Kontakt zwischen dem Medium und der mindestens einen Sensorschicht der Vielzahl der Segmente ermöglicht wird, oder wobei der Erkennungsabschnitt mehrere Kammern umfasst, wobei jede Kammer ein Segment und eine Kammer zum Aufnehmen des Mediums umfasst, wodurch ihre jeweilige Sensorschicht mit dem Medium in Berührung kommen kann.

3. Sensor nach Anspruch 1, wobei die Form des Erkennungsabschnitts ein Kreis, ein Fünfeck, ein Achteck, eine Blume, ein Stern, eine Ebene, eine Kugel, ein Quadrat, ein Rechteck umfasst oder vertikale Seiten umfasst oder eine 3D-Form, eine Kugelform, eine Pyramidenform oder eine beliebige Form aufweist, die die Konfiguration einer gemeinsamen Schnittzone ermöglicht.

4. Sensor nach Anspruch 1, wobei jedes Segment gemäß der Kretschmann-Raether-Konfiguration, der Otto-Konfiguration oder einer anderen Konfiguration konfiguriert ist, die eine gemeinsame Zone zwischen den Segmenten ermöglicht.

5. Sensor nach Anspruch 4, wobei die Vielzahl von Segmenten umfasst:
die gleiche Metallschicht mit unterschiedlicher Dicke in jedem Segment; oder die gleiche selektive Materialschicht, jedoch mit unterschiedlicher Dicke in jedem Segment;
oder eine unterschiedliche Metallschicht in jedem Segment mit gleicher Dicke;
oder die gleiche Metallschicht mit gleicher Dicke, jedoch mit unterschiedlichen dielektrischen Materialien oder dem gleichen dielektrischen Material mit unterschiedlicher Dicke;
oder jede andere Kombination davon, die eine Unterscheidung der Analyten ermöglicht.

6. Sensor nach Anspruch 1, wobei der mindestens eine Antwortparameter in unterschiedlichen Winkeln mindestens einen der folgenden Parameter umfasst: SPR-Kurve oder minimaler Reflexionswert oder Lichtintensität oder Wellenlänge oder Veränderung der Brechung oder Indexresonanzwinkel/Wellenlänge oder reflektierte/übertragene Intensität oder Schwerpunkt oder Gütefaktor FOM oder Halbwertsbreite FWHM.

7. Sensorsystem zur gleichzeitigen Erkennung mehrerer in einem Medium vorhandener Analyten, wobei das Sensorsystem umfasst:
mindestens einen Sensor (200) nach Anspruch 1;
mindestens eine Lichtanregungsquelle, die so konfiguriert ist, dass sie einen einzelnen Lichtstrahl auf die gemeinsame Schnittzone emittiert, die um den Schnittpunkt der Vielzahl der Segmente des Erkennungsabschnitts des mindestens einen Sensors herum konfiguriert ist, wobei eine Grenzfläche zwischen zwei Sensorschichten zweier benachbarter Segmente eine Grenze ist und wobei die gemeinsame Schnittzone der Ort ist, an dem jede Grenze mit den übrigen Grenzen in Kontakt steht;
mindestens ein Empfängermodul, das so konfiguriert ist, dass es einen einzelnen Lichtstrahl empfängt, der von der gemeinsamen Schnittzone reflektiert wird, und so konfiguriert ist, dass es mindestens einen Antwortparameter pro Segment bestimmt, der durch eine Oberflächenplasmonantwort induziert wird, die gleichzeitig durch die Interaktion des Lichtstrahls mit der gemeinsamen Schnittzone und dem mindestens einen zu bestimmenden Analyten erzeugt wird; und
mindestens eine Steuerungseinheit, die so konfiguriert ist, dass sie den mindestens einen im Medium vorhandenen Analyten als Funktion des mindestens einen bestimmten Antwortparameters pro Segment bestimmt.

8. Sensorsystem nach Anspruch 7, wobei die mindestens eine Lichtanregungsquelle eine monochromatische Lichtquelle wie beispielsweise einen Halbleiterlaser oder eine monochromatische und p-polarisierte Lichtquelle oder eine TM-polarisierte Lichtquelle oder eine Helium-Neon-Lichtquelle oder eine Weißlichtquelle oder eine Laserdiodenanordnung oder eine LED-Anordnung oder eine Breitbandlichtquelle umfasst, oder jede Lichtquelle mit einer Betriebswellenlänge im nahen Infrarotbereich des Spektrums, sodass ihre Wellenlänge im Bereich von 975,1 nm < λ < 1600 nm liegt.

9. Sensorsystem nach Anspruch 7, wobei das mindestens eine Empfängermodul mindestens einen Lichtdetektor, einen Wandler, der so konfiguriert ist, dass er das erfasste Licht in ein elektrisches Signal umwandelt, und ein Parametermodul umfasst, das so konfiguriert ist, dass es verschiedene Antwortparameter des empfangenen Lichts bestimmt.

10. Sensorsystem nach Anspruch 7, wobei die Steuerungseinheit so konfiguriert ist, dass sie den mindestens einen Analyten aus einer Nachschlagetabelle mit Assoziationen zwischen Antwortparameterwerten oder -änderungen und entsprechenden Analyten oder aus Vorhersagemitteln bestimmt, die so konfiguriert sind, dass sie basierend auf prädiktiven maschinellen Lernalgorithmen bestimmen.

11. Sensorsystem nach Anspruch 7, wobei die mindestens eine Steuerung eine Prozessor- oder Verarbeitungseinrichtung und einen Speicher oder eine Speichereinrichtung umfasst, die Programmcodeanweisungen enthält, um den mindestens einen im Medium vorhandenen Analyten als Funktion des mindestens einen bestimmten Antwortparameters pro Segment zu bestimmen, indem Veränderungen des Antwortparameters von der Emission bis zum Empfang bestimmt werden, wie beispielsweise Intensitätsänderungen oder Winkelverschiebungen des SPR-Einbruchs pro Segment.

12. Verfahren in einem Sensorsystem nach Anspruch 7 zur gleichzeitigen Erkennung mehrerer in einem Medium vorhandener Analyten, das Verfahren umfassend:
Abgeben eines einzelnen Lichtstrahls durch mindestens eine Lichtanregungsquelle auf die gemeinsame Schnittzone, die um den Schnittpunkt der Vielzahl der Segmente des Erkennungsabschnitts des Sensors herum konfiguriert ist, wobei eine Schnittstelle zwischen zwei Sensorschichten zweier benachbarter Segmente eine Grenze ist und wobei die gemeinsame Schnittzone der Ort ist, an dem jede Grenze mit den übrigen Grenzen in Kontakt steht, wobei der Erkennungsabschnitt das Medium umfasst;
Empfangen eines einzelnen Lichtstrahls, der von der gemeinsamen Schnittzone reflektiert wird, durch mindestens ein Empfängermodul und Bestimmen mindestens eines Antwortparameters pro Segment, der durch eine Oberflächenplasmonantwort induziert wird, die gleichzeitig durch die Interaktion des Lichtstrahls mit der gemeinsamen Schnittzone und dem mindestens einen zu bestimmenden Analyten erzeugt wird; und
Bestimmen des mindestens einen im Medium vorhandenen Analyten als Funktion des bestimmten Antwortparameters pro Segment durch mindestens eine Steuerungseinheit.

13. Verfahren nach Anspruch 12, umfassend:
Bestimmen des mindestens einen Analyten als Funktion des mindestens einen Antwortparameters pro Segment durch Bestimmen von Veränderungen des Antwortparameters von der Emission bis zum Empfang, wie beispielsweise Intensitätsänderungen oder Winkelverschiebungen des SPR-Einbruchs pro Segment;
oder Bestimmen, ob der Unterschied zwischen zwei oder mehr Lichtparameteränderungen innerhalb eines vorbestimmten Schwellenbereichs liegt, und Bestimmen des Analyten als Funktion des Mittelwerts aller Messwerte, die innerhalb des Schwellenbereichs liegen;
oder Bestimmen des prozentualen Anteils jedes im Medium vorhandenen Analyten als umgekehrte Funktion der Anzahl der bestimmten Analyten;
oder Modifizieren des bestimmten prozentualen Anteils als umgekehrte Funktion der Varianz des Analyten im Vergleich zu den verbleibenden Analyten.

## Revendications

1. Capteur (200) pour la détection simultanée de plusieurs analytes présents dans un milieu, le capteur comprenant une section de détection configurée avec une pluralité de segments (22n), chaque segment comprenant une couche sensible configurée pour entrer en contact avec le milieu contenant le ou les analytes et configurée avec une configuration différente selon l'analyte ou le type d'analyte, et les segments étant configurés avec une zone d'intersection commune (220) autour de leur point d'intersection sur laquelle un faisceau lumineux unique est incident et d'où un faisceau lumineux unique est réfléchi, l'interface entre deux couches sensibles de deux segments adjacents étant une limite et la zone d'intersection commune étant l'endroit où chaque limite est en contact avec les limites restantes, le faisceau lumineux réfléchi comprenant au moins un paramètre de réponse par segment induit par une réponse plasmonique de surface générée simultanément par l'interaction du faisceau lumineux incident avec la zone d'intersection commune et au moins le ou les analytes à déterminer, le ou les paramètres de réponse par segment permettant la détermination du ou des analytes présents dans le milieu.

2. Capteur selon la revendication 1, dans lequel la section de détection comprend une chambre (210) configurée pour recevoir le milieu permettant le contact entre le milieu et la ou les couches sensibles de la pluralité de segments, ou dans lequel la section de détection comprend une pluralité de compartiments, chaque compartiment comprenant un segment et une chambre pour contenir le milieu permettant à sa couche sensible respective d'être en contact avec le milieu.

3. Capteur selon la revendication 1, dans lequel la forme de la section de détection est un cercle, ou un pentagone, ou un octogone, ou une fleur, ou une étoile, ou une surface plane, ou une sphère, ou un carré, ou un rectangle, ou comprend des côtés verticaux, ou une forme en 3D, ou une sphère, ou une pyramide, ou n'importe quelle forme arbitraire permettant la configuration d'une zone d'intersection commune.

4. Capteur selon la revendication 1, dans lequel chaque segment est configuré selon la configuration de Kretschmann-Raether, ou la configuration d'Otto, ou toute autre configuration permettant une zone d'intersection commune entre les segments.

5. Capteur selon la revendication 4, dans lequel la pluralité de segments comprend :
la même couche métallique d'une épaisseur différente dans chaque segment ;
ou la même couche de matériau sélectif, mais d'épaisseur différente dans chaque segment ;
ou une couche métallique différente de même épaisseur dans chaque segment ;
ou la même couche métallique de même épaisseur, mais avec des matériaux diélectriques différents ou avec le même matériau diélectrique à des épaisseurs différentes ;
ou toute autre combinaison de ces éléments permettant la différenciation des analytes.

6. Capteur selon la revendication 1, dans lequel le ou les paramètres de réponse comprennent, à différents angles, au moins un des éléments suivants, à savoir la courbe SPR, la valeur de réflectance minimale, l'intensité lumineuse, la longueur d'onde, le changement de réfraction, l'angle/la longueur d'onde de résonance d'indice, l'intensité réfléchie/transmise, le centroïde, le facteur de mérite FOM ou la largeur à mi-hauteur FWHM.

7. Système de capteurs pour la détection simultanée de plusieurs analytes présents dans un milieu, le système de capteurs comprenant :
au moins un capteur (200) selon la revendication 1 ;
au moins une source d'excitation lumineuse configurée pour émettre un seul faisceau lumineux sur la zone d'intersection commune configurée autour du point d'intersection de la pluralité de segments de la section de détection du ou des capteurs, une interface entre deux couches sensibles de deux segments adjacents étant une limite et dans laquelle la zone d'intersection commune est l'endroit où chaque limite est en contact avec les limites restantes ;
au moins un module récepteur configuré pour recevoir un faisceau lumineux unique réfléchi par la zone d'intersection commune et configuré pour déterminer au moins un paramètre de réponse, par segment, induit par une réponse plasmonique de surface générée simultanément par l'interaction du faisceau lumineux avec la zone d'intersection commune et au moins un analyte à déterminer ; et
au moins un contrôleur configuré pour déterminer le ou les analytes présents dans le milieu en fonction du ou des paramètres de réponse déterminés par segment.

8. Système de capteurs selon la revendication 7, dans lequel la ou les sources d'excitation lumineuse comprennent une source de lumière monochromatique telle qu'un laser à semi-conducteur ou une source de lumière monochromatique et polarisée p, ou une source de lumière polarisée TM, ou une source de lumière hélium-néon, ou une source de lumière blanche, ou un réseau de diodes laser, ou un réseau de DEL, ou une source de lumière à large bande, ou n'importe quelle source de lumière dont la longueur d'onde de fonctionnement se situe dans la partie proche infrarouge du spectre, de telle sorte que sa longueur d'onde soit comprise dans la plage de 975,1 nm < λ < 1600 nm.

9. Système de capteurs selon la revendication 7, dans lequel le ou les modules récepteurs comprennent au moins un détecteur de lumière, un transducteur configuré pour convertir la lumière détectée en un signal électrique et un module de paramètres configuré pour déterminer différents paramètres de réponse de la lumière reçue.

10. Système de capteurs selon la revendication 7, dans lequel le contrôleur est configuré pour déterminer le ou les analytes à partir d'une table de consultation d'associations entre les valeurs ou les changements des paramètres de réponse et les analytes correspondants ou à partir de moyens de prédiction configurés pour effectuer une détermination sur la base d'algorithmes d'apprentissage automatique prédictifs.

11. Système de capteurs de la revendication 7, dans lequel le ou les contrôleurs comprennent un processeur, ou des moyens de traitement, et une mémoire, ou des moyens de stockage, comprenant des instructions de code de programme pour déterminer le ou les analytes présents dans le milieu en fonction du ou des paramètres de réponse déterminés par segment en déterminant les changements du paramètre de réponse de l'émission à la réception, tels que les changements d'intensité ou les décalages d'angle du creux SPR par segment.

12. Procédé dans un système de capteurs selon la revendication 7 de détection simultanée de plusieurs analytes présents dans un milieu, le procédé comprenant :
l'émission, par au moins une source d'excitation lumineuse, d'un faisceau lumineux unique sur la zone d'intersection commune configurée autour du point d'intersection de la pluralité de segments de la section de détection du capteur, une interface entre deux couches sensibles de deux segments adjacents étant une limite et la zone d'intersection commune étant l'endroit où chaque limite est en contact avec les limites restantes, la section de détection comprenant le milieu ;
la réception, par au moins un module récepteur, d'un faisceau lumineux unique réfléchi par la zone d'intersection commune et la détermination d'au moins un paramètre de réponse, par segment, induit par une réponse plasmonique de surface générée simultanément par l'interaction du faisceau lumineux avec la zone d'intersection commune et au moins un analyte à déterminer ; et
la détermination, par au moins un contrôleur, du ou des analytes présents dans le milieu en fonction du paramètre de réponse déterminé par segment.

13. Procédé selon la revendication 12, comprenant :
la détermination du ou des analytes en fonction d'au moins un paramètre de réponse par segment en déterminant les changements du paramètre de réponse de l'émission à la réception, tels que les changements d'intensité ou les décalages d'angle du creux SPR par segment ;
ou la détermination établissant si la différence entre deux ou plusieurs changements de paramètres lumineux se situe dans une plage de seuil prédéterminée et la détermination de l'analyte en fonction de la moyenne de toutes les lectures qui se situent dans la plage de seuil ;
ou la détermination de la proportion en pourcentage de chaque analyte présent dans le milieu en fonction inverse du nombre d'analytes déterminés ;
ou la modification de la proportion en pourcentage déterminée en fonction inverse de la variance de l'analyte par rapport aux autres analytes.
